# EUROPÄISCHE PATENTSCHRIFT

(11) **EP 1 433 519 B1**
(45) Veröffentlichungstag und Bekanntmachung des Hinweises auf die Patenterteilung: **27.02.2013**
(21) Anmeldenummer: 03029733.7
(22) Anmeldetag: 23.12.2003
(51) Int. Cl.: B01D 53/94, F01N 3/022, F01N 3/035, B01J 37/02, B01D 46/24

(54) **Verfahren zur Herstellung eines Partikelfilter mit NOx-Speicherkatalysatorfunktion**
Method for producing a particle filter with NOx storage function
Procédé de fabrication d'un filtre à particules avec une fonction de stockage des NOx

(30) Priorität: 27.12.2002 DE 10261620
(43) Veröffentlichungstag der Anmeldung: 30.06.2004
(73) Patentinhaber: Volkswagen Aktiengesellschaft, 38440 Wolfsburg (DE)
(72) Erfinder: Standt, Ulrich-Dieter, Dr., 38527 Meine (DE); Weidmann, Kurt, Dr., 38444 Wolfsburg (DE)

(56) Entgegenhaltungen:
- EP-A- 0 766 993
- EP-A- 1 214 973
- EP-A- 1 273 339
- EP-A1- 1 250 952
- WO-A-03/041846
- DE-A1- 19 921 974
- FR-A- 2 820 989
- JP-A- 2001 310 128
- US-A- 4 256 609
- US-A- 5 100 632

## Beschreibung

Die Erfindung betrifft ein Verfahren zur Herstellung eines Partikelfilters mit NOx-Speicherkatalysatorfunktion zur Behandlung der Abgase einer Brennkraftmaschine, insbesondere einer Dieselbrennkraftmaschine nach dem Oberbegriff des Anspruchs 1.

Partikelfilter dienen zur Abgasnachbehandlung von Dieselbrennkraftmaschinen, um die Partikelemission bei Dieselabgasen zu mindern. Im Falle einer weiteren Verschärfung der Grenzwerte für Diesel- und Ottomotoren würden auch Abgase von Ottomotoren einer Abgasnachbehandlung bezüglich ihrer Partikelbeladung bedürfen. Um zukünftige Grenzwerte erfüllen zu können, wird seit kurzem diskutiert einen NOx-Speicher-Katalysator zur Abgasnachbehandlung von Dieselabgasen einzusetzen. Die Kombination eines NOx-Speicher-Katalysators mit einem Dieselpartikelfilter ist problematisch, da aus Gründen des Temperaturmanagements der Dieselpartikelfilter vorne angebracht werden muß, damit er regenerieren kann. Während der Regeneration wird jedoch der Dieselpartikelfilter so heiß, daß die Abgase nach Dieselpartikelfilter den NOx-Speicher-Katalysator thermisch zu hoch belasten würden.

Eine mögliche Lösung dieses Problems ist der kombinierte Dieselpartikelfilter mit NOx-Speicher-Katalysator-Funktionen, wie er in EP 0 766 993 A2 beschrieben ist. Der dort erläuterte Partikelfilter basiert auf einem mit Kanälen in Längsrichtung versehenen Monolithen, dessen Kanäle wechselseitig verschlossen sind und dessen Kanalwände eine vorbestimmte Porosität aufweisen. Durch den wechselseitigen Verschluß der Kanäle wird ein Wanddurchtritt des Abgases erzwungen, wodurch die Partikel mit einem Durchmesser größer als die Poren aus dem Abgasstrom herausgefiltert werden. Der Durchmesser der Poren der Wände liegt zwischen 25 und 35 µm. Die Poren, d.h. die Kanäle der Wände, sind mit einer Schicht überzogen, die das NOx-speichernde Katalysatormaterial enthält, so daß die gefilterten Teilchen verbrannt werden, wenn die Temperatur des Katalysators über eine vorbestimmte Temperatur erhöht wird, da dann das gespeicherte NOx als NO₂ freigesetzt wird und mit den gespeicherten Partikeln reagiert.

Der Auftrag von katalytisch wirksamem Edelmetall auf die Trägeroberfläche wird üblicherweise als Bestandteil einer Beschichtung durchgeführt. Dabei wird ein sogenannter "Washcoat" aufgetragen, der im wesentlichen aus einer basischen aktiven Zwischenschicht aus Al₂O₃ besteht, evtl. mit sauren Zuschlägen aus TiO₂ oder SiO₂, sowie gegebenenfalls aus CeO₂ zur Darstellung der O₂-Speicherfähigkeit und gegebenenfalls Seltenerdoxiden wie ZrO₂ oder La₂O₃ zur Stabilisierung des Edelmetalls im Washcoat.

In Ronald M. Heck und Robert J. Farrauto: "Catalytic Air Pollution Control", van Nostrand Reinhold, New York 1995, werden verschiedene Beschichtungsverfahren beschrieben, so der kombinierte Edelmetall-Washcoat-Auftrag und als Alternative der separate Washcoat-Auftrag mit nachfolgender Tränkung des so mit einem Washcoats versehenen Trägers mit einer Salzlösung der katalytisch wirksamen Bestandteile.

Nachteilig bei der bekannten Vorrichtung ist, daß durch das Aufbringen der NOx-Beschichtung in Form eines Washcoats die Porosität des Partikelfilters herabgesetzt wird.

Aus der US 5,100,632 A ist ein Partikelfilter bekannt, bei dem ein Partikelfilterelement mit porösen Filterwänden aus einem keramischen Werkstoff mit einem Edelmetall/Platin und einem zur NOX-Speicherung befähigten Erdalkalimetall/Magnesium beschichtet ist. Hierzu wird der Filter in einer wässrigen Lösung aus NOx-Speicherkomponente und Edelmetall getränkt und anschließend getrocknet und kalziniert.

Der Erfindung liegt daher die Aufgabe zugrunde, ein ökonomischeres Verfahren zur Herstellung eines Partikelfilters mit einer NOx-Speicherfunktion sowie einen derartigen Partikelfilter zu schaffen, wobei der Katalysatoreintrag die Porosität des Partikelfilters nicht verringert

Die Aufgabe wird durch ein Verfahren zur Herstellung eines Partikelfilters nach Anspruch 1 gelöst. Bevorzugte Ausführungsformen der Erfindung sind Gegenstand der Unteransprüche.

Bei dem erfindungsgemäßen Verfahren zur Herstellung eines Partikelfilters mit einer NOx-Speicherkatalysatorfunktion zur Reinigung des Abgases einer Brennkraftmaschine, wobei der Partikelfilter in Strömungsrichtung des Abgases einen von einer Vielzahl von Kanälen durchzogenen Träger aufweiset, dessen Kanäle wechselseitig verschlossen sind und die Kanalwände eine vorgegebene Porosität zum Durchtritt des Abgases von einem zur Abgaseintrittsrichtung offenen Kanal in einen zur Abgasaustrittsrichtung offenen Kanal aufweisen, wird die NOx-Speicherfunktion des Partikelfilters durch Tränkung des Trägers mit einer wäßrigen Lösung aus NOx-Speicherkomponente und Edelmetallsalz geschaffen, wobei die Polarität der Tränkungslösung durch Zumischung polaritätsherabsetzender organischer Moleküle herabgesetzt wird, so daß der NOx-Speicherkatalysator, bestehend aus der NOx-Speicherkomponente und der Katalysatorkomponente, in der Oberfläche der Kanalwände und deren Poren angeordnet ist.

Die aktiven Komponenten, nämlich die Speicherkomponente und das Edelmetallsalz, werden daher nicht als hochviskoser Auftrag in den Träger, d.h. den mit wechselseitig verschlossenen Kanälen durchzogenen Monolithen, in der Form eines Washcoats eingebracht, sondern es erfolgt eine Tränkung des Trägers, wodurch die Komponenten in den Kanalwänden und insbesondere in den Wänden der Poren angeordnet sind. Als Trägermaterial wird üblicherweise Cordierit bzw. SiC verwendet, für den Katalysator kommt ein geeignetes Edelmetall in Betracht und die Speicherkomponente wird durch BaO, SrO, MgO, ein anderes Alkali- bzw. Erdalkalioxid oder ein geeignetes Übergangsmetalloxid gebildet.

In einer bevorzugten Ausführungsform sind die Wände vollständig getränkt.

In einer weiteren bevorzugten Ausführungsform wird das Eindringen der Tränkungslösung in den Träger, d.h. dessen Wände, auf den Bereich unmittelbar an der Oberfläche der Wände bzw., der Porenwände eingeschränkt, vorzugsweise auf eine Eindringtiefe von kleiner oder gleich 5 µm.

Dazu wird insbesondere die Polarität der Tränkungslösung durch Zumischung polaritätsherabsetzender organischer Moleküle herabgesetzt. Dies kann durch Zumischung geeigneter organischer Moleküle erfolgen, wie beispielsweise durch wasserlösliche organische Verbindungen. Beispiele dafür sind Alkohole, nämlich monofunktionale Alkohole wie Ethanol, i-Propanol, difunktionale Alkohole wie Ethandiol, und trifunktionale Alkohole wie Propantriol, sowie davon abgeleitete Dimere, Trimere oder Oligomere wie Diethylenglykol, 2,2'-Dihydroxiethylether, bis hin zu Polyolen. Ferner können niedermolekulare Ether, beispielsweise Dioxan und Tetrahydrofuran, und niedermolekulare Ketone wie Aceton verwendet werden.

In einer bevorzugten Ausführungsform wird die Tränkung der Wände des Trägers auf die ausgangsseitigen Kanäle beschränkt, wobei auch hier die Eindringtiefe der Tränkung auf die Wandoberfläche beschränkt bleibt, d.h. es wird keine Durchtränkung der Wand vorgenommen. Dies geschieht durch die Herabsetzung der Polarität wie oben beschrieben. Durch die Tränkung der Oberflächen der ausgangsseitigen Kanäle kommt es auch zu einer Tränkung der Ausgangsseite der Poren. Auf diese Weise kann die Menge an benötigtem Edelmetall verringert werden und die Anordnung des Edelmetalls in den Ausgangskanälen ist insofern vorteilhaft, da die Wände der ausgangsseitigen Kanäle keine Partikelbedeckung aufweisen, die die Wirksamkeit der Katalysatorkomponente und der Speicherkomponente herabsetzt. In den eingangsseitigen Kanälen wird mit dem Betrieb des Partikelfilters eine Partikelschicht aufgebaut, die die NOx-Speicherkatalysatorkomponente abdeckt, falls vorhanden, und deren Wirksamkeit herabsetzt. Die Partikelschicht wird erst in der Regenerationsphase wieder entfernt. Es wird so erreicht, daß mindestens 30% des Stickoxidumsatzes in den ausgangsseitigen Kanälen erfolgt.

Bei einem insbesondere nach dem oben genannten Verfahren hergestellten Partikelfilter mit einer NOx-Speicherkatalysatorfunktion zur Reinigung von Abgases einer Brennkraftmaschine, wobei der Partikelfilter in Strömungsrichtung des Abgases einen von einer Vielzahl von Kanälen durchzogenen Träger aufweist, dessen Kanäle wechselseitig verschlossen sind und die Kanalwände eine vorgegebene Porosität zum Durchtritt des Abgases von einem zur Abgaseintrittsrichtung offenen Kanal in einen zur Abgasaustrittsrichtung offenen Kanal aufweisen, weist daher der Träger keine Washcoat-Beschichtung auf und der NOx-Speicherkatalysator des Partikelfilters ist in der Oberfläche des Trägers angeordnet. Dabei können einerseits die Wände vollständig mit dem NOx-Dpeicherkatalysator durchsetzt sein, oder der NOx-Speicherkatalysator ist in der Nähe der Oberfläche der Wände und Poren des Trägers anbeordnet, vorzugsweise mit einer Eindringtiefe von kleiner oder gleich 10 µm, insbesondere kleiner oder gleich 5 µm.

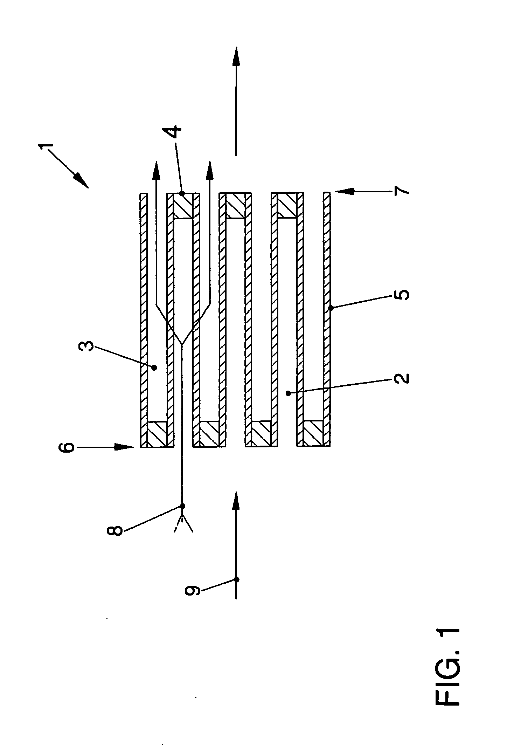

Eine bevorzugte Ausführungsform der Erfindung wird nachfolgend anhand der einzigen Zeichnung erläutert, die schematisch einen Querschnitt durch einen Partikelfilter zeigt.

Ein Partikelfilterträger 1 umfaßt eine Vielzahl von Kanälen 2, 3, die wechselseitig durch Stopfen 4 verschlossen sind und voneinander durch Wände 5 getrennt sind. Es werden so Kanäle 2, die zur Eintrittsseite 6 des Abgases hin offen sind, und Kanäle, die zur Austrittsseite 7 des Abgases hin offen sind, gebildet. Die Wände 5 sind von einer vorgegebenen Porosität, so daß Abgas, hier dargestellt durch einen Pfeil 8, mit der Strömungsrichtung 9 in einen zur Eintrittsseite hin offenen Kanal 2 gelangt, durch Poren (nicht dargestellt) der Wand 5 hindurch in die austrittsseitig offenen Kanäle 3 strömt und den Partikelfilter 1 wiederverläßt. Bei dem Durchtritt des Abgases 8 durch die Wand 5 werden Teilchen, deren Partikelgröße größer als der Porendurchmesser ist, im Filter zurückgehalten. Ferner wird NOx in den mit den NOx-Speicherkatalysatorkomponenten getränkten Wänden 5 gespeichert und während der Regeneration des Filters als NO₂ wieder abgegeben, das mit den gespeicherten Partikeln reagiert, d.h. die gespeicherten Partikel werden verbrannt. Insbesondere sind die Oberflächen der ausgangsseitigen Kanäle 3 mit den NOx-Speicherkatalysatorkomponenten getränkt.

### BEZUGSZEICHENLISTE

- 1: Partikelfilterträger
- 2: Kanal
- 3: Kanal
- 4: Stopfen
- 5: Wand
- 6: Eintrittsseite
- 7: Austrittsseite
- 8: Abgas
- 9: Strömungsrichtung

## Patentansprüche

1. Verfahren zur Herstellung eines Partikelfilters mit einer NOx-Speicherkatalysatorfunktion zur Reinigung des Abgases einer Brennkraftmaschine, wobei der Partikelfilter in Strömungsrichtung (9) des Abgases einen von einer Vielzahl von Kanälen (2, 3) durchzogenen Träger (1) aufweist, dessen Kanäle wechselseitig verschlossen sind und die Kanalwände (5) eine vorgegebene Porosität zum Durchtritt des Abgases von einem zur Abgaseintrittsrichtung offenen Kanal (2) in einen zur Abgasaustrittsrichtung offenen Kanal (3) aufweisen **dadurch gekennzeichnet, dass** die NOx-Speicherfunktion des Partikelfilters durch Tränkung der ausgangsseitigen Kanäle (3) des Trägers (1) mit einer wässrigen Lösung aus NOx-Speicherkomponente und Edelmetallsalz erfolgt, wobei die Polarität der Tränkungslösung durch Zumischung polaritätsherabsetzender organischer Moleküle herabgesetzt wird, so dass der NOx-Speicherkatalysator, bestehend aus der NOx-Speicherkomponente und der Katalysatorkomponente, in der Oberfläche der Kanalwände (5) und deren Poren angeordnet ist.

2. Verfahren nach Anspruch 1, **dadurch gekennzeichnet, dass** die organischen Moleküle ausgewählt werden aus der Gruppe bestehend aus Alkoholen, davon abgeleiteten Dimeren, Trimeren oder Oligomeren, niedermolekularen zyklischen Estern und niedermolekularen Ketonen.

3. Verfahren nach Anspruch 1, **dadurch gekennzeichnet, dass** die Alkohole umfassen monofunktionale, difunktional und trifunktionale Alkohole.

4. Verfahren nach Anspruch 3, **dadurch gekennzeichnet, dass** die monofunktionalen Alkohole durch Ethanol, i-Propanol, die difunktionalen Alkohole durch Ethandiol und die trifunktionalen Alkohole durch Propantriol gebildet sind.

5. Verfahren nach Anspruch 2, **dadurch gekennzeichnet, dass** die niedermolekularen zyklischen Ether durch Dioxan und Tetrahydrofuran gebildet sind.

6. Verfahren nach Anspruch 2, **dadurch gekennzeichnet, dass** die niedermolekularen Ketone durch Aceton gebildet sind.

## Claims

1. Process for producing a particle filter having an NOx storage catalyst function for cleaning the off-gas of an internal combustion engine, wherein the particle filter includes in the flow direction (9) of the off-gas a carrier (1) which is traversed by a multiplicity of channels (2, 3) and the channels of which are alternatingly sealed and the channel walls (5) have a predetermined porosity for passage of the off-gas from a channel (2) which is open in the off-gas inlet direction into a channel (3) which is open in the off-gas outlet direction, **characterized in that** the NOx storage function of the particle filter is effected by drenching the exit-side channels (3) of the carrier (1) with an aqueous solution of NOx storage component and noble metal salt, wherein the polarity of the drenching solution is reduced by admixing polarity-reducing organic molecules, so the NOx storage catalyst, consisting of the NOx storage component and the catalyst component, is in the surface of the channel walls (5) and pores thereof.

2. Process according to Claim 1, **characterized in that** the organic molecules are selected from the group consisting of alcohols, alcohol dimers, trimers or oligomers, low molecular weight cyclic esters and low molecular weight ketones.

3. Process according to Claim 1, **characterized in that** the alcohols comprise monofunctional, difunctional and trifunctional alcohols.

4. Process according to Claim 3, **characterized in that** the monofunctional alcohols are formed by ethanol, i-propanol, the difunctional alcohols by ethanediol and the trifunctional alcohols by propanetriol.

5. Process according to Claim 2, **characterized in that** the low molecular weight cyclic ethers are formed by dioxane and tetrahydrofuran.

6. Process according to Claim 2, **characterized in that** the low molecular weight ketones are formed by acetone.

## Revendications

1. Procédé de fabrication d'un filtre à particules comprenant une fonction de catalyseur de stockage des NOₓ pour la purification du gaz d'échappement d'un moteur à combustion, le filtre à particules comprenant dans la direction d'écoulement (9) du gaz d'échappement un support (1) traversé par une pluralité de canaux (2, 3), dont les canaux sont fermés sur des côtés alternés et les parois des canaux (5) présentent une porosité donnée pour le passage du gaz d'échappement d'un canal (2) ouvert dans la direction de l'entrée du gaz d'échappement vers un canal (3) ouvert dans la direction de sortie du gaz d'échappement, **caractérisé en ce que** la fonction de stockage des NOₓ du filtre à particules résulte de imprégnation des canaux (3) du côté de la sortie du support (1) avec une solution aqueuse du composant de stockage des NOₓ et un sel de métal noble, la polarité de la solution d'imprégnation étant réduite par incorporation de molécules organiques abaissant la polarité, de manière à ce que le catalyseur de stockage des NOₓ, constitué du composant de stockage des NOx et du composant catalytique, soit agencé dans la surface des parois des canaux (5) et leurs pores.

2. Procédé selon la revendication 1, **caractérisé en ce que** les molécules organiques sont choisies dans le groupe constitué par les alcools, les dimères, trimères et oligomères en dérivant, les esters cycliques de faible poids moléculaire et les cétones de faible poids moléculaire.

3. Procédé selon la revendication 1, **caractérisé en ce que** les alcools comprennent des alcools monofonctionnels, bifonctionnels et trifonctionnels.

4. Procédé selon la revendication 3, **caractérisé en ce que** les alcools monofonctionnels sont formés par de l'éthanol, de l'i-propanol, les alcools bifonctionnels pair de l'éthanediol et les alcools trifonctionnels par du propanetriol.

5. Procédé selon la revendication 2, **caractérisé en ce que** les éthers cycliques de faible poids moléculaire sont formés par du dioxane et du tétrahydrofurane.

6. Procédé selon la revendication 2, **caractérisé en ce que** les cétones de faible poids moléculaire sont formées par de l'acétone.
